# EUROPEAN PATENT APPLICATION

(11) **EP 2 151 160 A2**
(43) Date of publication of application: **10.02.2010**
(21) Application number: 09075329.4
(22) Date of filing: 29.07.2009
(51) Int. Cl.: A01K 5/02

(54) **Device for dispensing feed**

(30) Priority: 08.08.2008 NL 1035804
(71) Applicant: Lely Patent N.V., 3147 PA Maassluis (NL)
(72) Inventor: Sie, Howard, 3037 VC Rotterdam (NL); Voogd, Lucien Eliza Niels, 4143 HG Leerdam (NL); Van den Berg, Karel, 2971 VB Bleskensgraaf (NL)
(74) Representative: Corten, Maurice Jean F.M.

(57) **Abstract**

A device is provided for dispensing feed to feed troughs for animals such as cows. In one embodiment, the feed troughs are separate from the frame. Furthermore, the frame may be provided with a number of storage boxes (9) for storing a supply of feed. The storage box (9) has an outlet (55). The feed can be removed from the storage box via the outlet. The device furthermore comprises a conveying device (70) for conveying feed from the storage boxes to respective feed troughs. The conveying device comprises a receptacle or container for temporarily accommodating feed. This receptacle is movable along a guide (71) provided on the frame. The receptacle is movable from a position downstream of the outlet of the storage box to positions upstream of the respective feed troughs. The guide comprises at least two tracks (72,73), which extend substantially parallel to one another. As a result, a stable guide for the receptacle can be provided along which the receptacle is movable.

## Description

The invention relates to a device for dispensing feed. The device relates in particular to dispensing feed to a number of feed troughs which are accessible to animals.

It is known, for example from EP 0 254 171 in the name of Strautmann, to provide a number of feed troughs with feed by supplying this feed from a supply to said feed troughs by means of a conveying device. The feed is taken from the supply to the feed trough by a transport tray suspended from a guide. Filling of the feed troughs can be controlled by moving the tray to the desired feed trough.

It is an object to improve the existing device and in particular to reduce the size of the existing device.

This object is achieved by means of a device according to Claim 1. Thus, a device is obtained which can be assembled so as to be more compact as a result of the fact that a receptacle can be positioned between tracks of the guide. This results in a space saving, which is not possible with the known construction according to EP 0 254 171. Compared to the prior art, in particular the height of the device can be reduced. It also becomes possible to supply feed to the receptacle without the guide obstructing access to the receptacle.

The device according to the invention and in particular the guide supports the receptacle. The receptacle rests on the guide. Preferably, the receptacle travels on the guide.

According to one aspect, a device is provided for dispensing feed to a number of feed troughs which are accessible to animals. The animals may be dairy animals, such as cows. In one embodiment, the feed troughs are separate from the frame. Furthermore, the frame may be provided with a number of storage boxes for storing a supply of feed. The storage boxes can also be provided separate from the frame. Preferably, the storage box has an outlet. The feed can be removed from the storage box via the outlet. The feed from the storage box is available via the outlet. The device furthermore comprises a conveying device for conveying feed from the storage boxes to respective feed troughs. Thus, the feed dispensed via the outlet can be passed to the desired feed trough. According to one embodiment, the conveying device comprises a receptacle or container for temporarily accommodating feed. This receptacle is preferably movable along a guide provided on the frame. The receptacle is preferably movable from a position downstream of the outlet of the storage box to positions upstream of the respective feed troughs. According to one aspect of the invention, the guide comprises at least two tracks, which preferably extend substantially parallel to one another. Thus, a stable guide for the receptacle can be provided along which the receptacle is movable.

The tracks are preferably situated on both sides of the receptacle. The receptacle is positionable between these tracks, which results in a more compact device.

Preferably, the receptacle is placed substantially between the tracks. As a result thereof, the space near the tracks and the guide can be used more efficiently. Preferably, the inlet for the receptacle and the outlet from the receptacle are situated between the tracks. Preferably, the outlet of the receptacle is formed by a controllable hatch.

Preferably, the guide and/or the two tracks comprise a double rail. The receptacle may be part of a collecting trolley which is movable over the rails. The collecting trolley can rest on the rails on account of the force of gravity. Suitable wheels or the like can be used for this purpose. As a result thereof, no complex constructions such as those known from the prior art are required. A control signal can control the movement of the collecting trolley and, by means thereof, the final position can be determined. In one embodiment, a suitable sensor is present which determines the location of the collecting trolley on the guide. The control signal and/or the sensor can be controlled by means of a control system.

The device may comprise a frame which is provided with a number of feed troughs. Thus, a device is provided which can be placed in a stable in its entirety.

Preferably, the device is a feed column. A feed column substantially comprises a number of parts between which feed is passed. The parts are preferably situated in a vertical structure, in which the force of gravity is mainly used for transportation of the feed between the parts. Feed can be poured from the supplies into the feed trough. A device in the form of a feed column can be placed in a stable in the vicinity of the living space of dairy animals, such as cows, in its entirety and meets the need of feeding animals.

Preferably, a metering device for metering feed is connected to the frame, thus making it possible to weigh the amounts of feed. Preferably, the metering device is positioned downstream of the outlet of the storage box. Thus, the amount of feed which is dispensed from the storage box can be metered to form the desired portions.

Preferably, the metering unit comprises a weighing unit for weighing the amount of feed from the storage box which is made available via the outlet. Thus, the amount of feed dispensed by the storage box can be measured, which enables the metering unit to take a suitable amount/weight of feed from the storage box.

The metering unit is preferably positioned upstream of the conveying device and in particular of the receptacle or container of the conveying device. As a result, the weighed amount of feed which is taken from the storage box can be supplied to the receptacle and subsequently be passed to the suitable feed trough.

Preferably, the metering unit comprises a controllable hatch which makes it possible to pass feed into the metering unit, in particular into a metering receptacle, and pass it from the metering unit, and in particular from the metering receptacle, by opening the hatch. This makes it possible to make use of the force of gravity for carrying away the metered portion.

Preferably, the feed troughs are positioned next to one another in a row. This makes it possible to work with a substantially rectilinear guide and to move the receptacle along this straight line in order thus to reach the desired feed troughs.

Preferably, the receptacle is movable above the feed troughs. This makes it possible to pass feed from the receptacle to the feed trough by means of the force of gravity. In particular, the receptacle is provided with a hatch through which the feed is passed from the receptacle to the feed trough by opening the hatch.

Preferably, the receptacle is movable below the outlet of the storage box or, if a metering device is provided, below the outlet of the metering device. This makes it possible to pass the feed into the receptacle on account of the force of gravity.

The device for dispensing feed to feed troughs preferably comprises a number of modular parts. A modular part preferably comprises a guide in the form of two tracks which are connected to a frame. The frame is connectable to frame parts, thus extending the guide. As a result, an additional track is added to the existing guide and the guide is extended. This makes it possible to reach additional feed troughs. Preferably, the modular unit comprises feed troughs which are arranged on the frame. The feed troughs are preferably under the guide. The modular part preferably comprises the tracks for extending the guide, with an inlet to the feed troughs being placed between the tracks. Preferably, the inlet comprises a downpipe which runs from the vicinity of the tracks to the feed trough. This results in a modular part by means of which additional capacity can easily be added to a device, in particular with additional feed troughs, as a result of which more animals can be fed in a stable.

The device preferably comprises a number of storage boxes, preferably two, more preferably at least three storage boxes. This allows different kinds of feed to be stored separately from one another in the storage boxes and to be mixed by moving the receptacle of the conveying device downstream of the storage boxes and to open the outlet of the storage boxes. On account of the force of gravity, the feed components will be mixed to a minimum degree.

The invention also relates to a system comprising a device according to one of the embodiments as described in this application, also comprising the feed troughs.

In one embodiment, the system also comprises a conveying unit for supplying feed to the storage boxes from an external unit. This may be an external supply, such as a supply which is placed outside the stable. This supply may be readily accessible to the farmer and this makes it possible for the farmer to replenish the supply without it being necessary, for example, for a lorry to drive into the stable. According to one embodiment, the conveying unit can comprise a gripper which can be introduced into the supply and thus grab part of the supply and take it to the storage box.

The invention also relates to a modular unit for a device for dispensing feed to a number of feed troughs which are accessible to animals.

According to an advantageous embodiment, the device comprises feed troughs which are substantially placed in one line and which are accessible from in each case the opposite direction. This allows for a more compact design. In addition, with one guide which is substantially rectilinear, the feed troughs which are accessible to animals on either side of the device can be used.

The invention will be described in more detail below with reference to preferred embodiments which are illustrated in the figures. However, the invention is not limited to these embodiments and also comprises embodiments which have not been illustrated. In addition, this description not only encompasses the description of the invention according to the claims as filed, but other advantages of a device, system and/or method or use thereof are also illustrated and/or described, explicitly or implicitly, and the application can also be aimed at one of these aspects.

The embodiments of the invention will be described below with reference to illustrated examples in the attached figures, in which
Figure 1 shows a front view of a first embodiment of the device according to the invention,
Figure 2 shows a top view of a second embodiment of the invention,
Figure 3 shows a partially cut-away perspective view of a conveying device according to the invention,
Figure 4 shows a side view of a fourth embodiment of the invention,
Figure 5a shows a side view of a detail of the conveying device from Figure 3,
Figure 5b shows a front view of a detail of the conveying device from Figure 3,
Figure 5c shows a top view of a detail of the conveying device from Figure 3,
Figure 6 shows a partially cut-away perspective view of a metering device according to the invention, and
Figure 7 shows a view in cross section of a detail of an embodiment of the guide according to the invention.

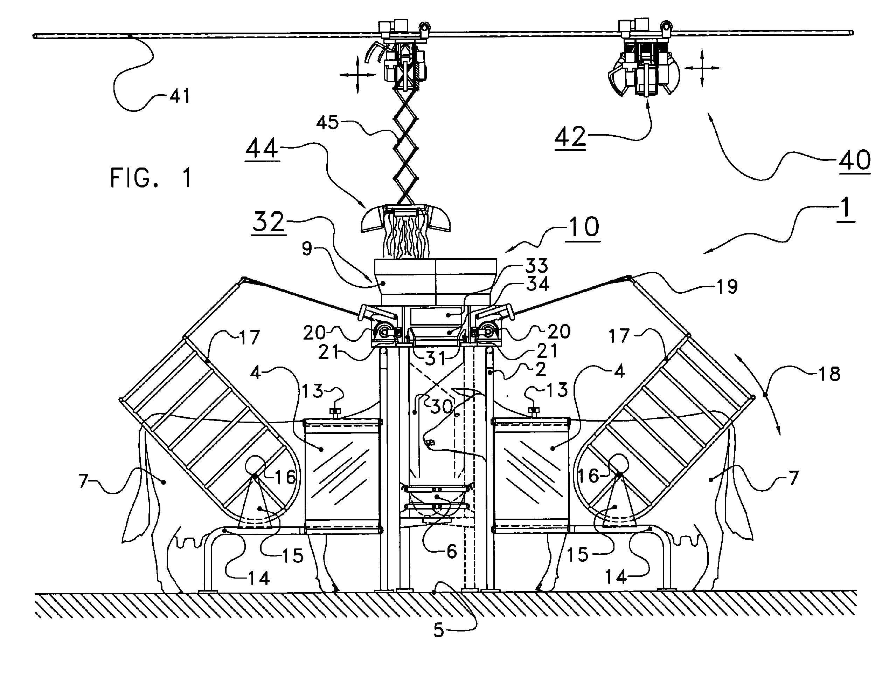

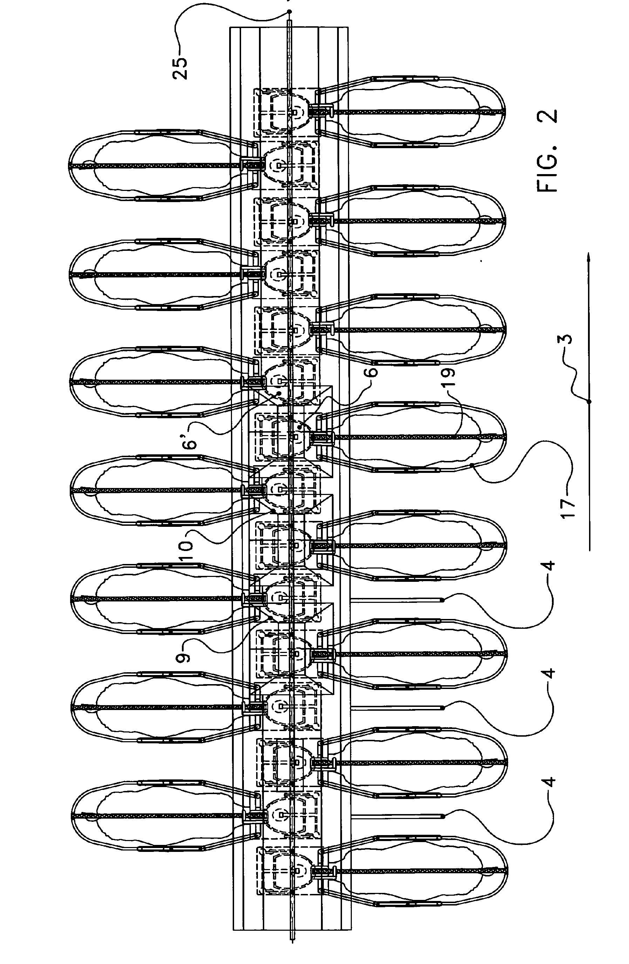

Figure 1 diagrammatically shows a device for dispensing feed to animals, in particular, but not exclusively, cows. The device 1 comprises a frame 2. In the illustrated embodiment of Figures 1 and 2, the device 1 substantially extends in a longitudinal direction 3.

At the top side of the frame 2, there are storage boxes 9, 10. In Figure 1, two storage boxes 9 and 10 are arranged on the frame 2 on either side of the longitudinal axis 25, if required partially overlapping, while Figure 2 shows an embodiment in which the storage boxes 9,10 are arranged virtually centrally above the longitudinal axis 25.

To this end, features (not shown in any more detail) are provided on the frame 2 for fitting the storage boxes 9, 10. A plurality of storage boxes 9,10 can be fitted next to one another in the longitudinal direction 3.

The device 1 with frame 2 is placed on a floor 5, preferably with a floor part 8 on which an animal can stand. In one embodiment, the device 1 has an additional floor on which the animals stand. This can easily be cleaned. If desired, additional elements may be incorporated into the floor, such as a load cell for determining the weight of the cow 7.

The frame 2 is preferably provided with partitions 4 between neighbouring feed troughs 6. The partitions 4 are optionally detachably connected to the frame 2. The partitions prevent an animal 7 being disturbed by another animal while eating from a feed trough 6.

Since cows which eat from a feed trough 6 come into close proximity with the partition 4, in one embodiment a readout device 13 is provided in the partition 4 for reading out, for example, the data in a step counter which is provided on the cows. It is also possible to identify an animal 7 by means thereof and to retrieve a program which is adapted to the animal, in particular a feeding program, from a memory of a control unit and for it to be carried out by the device 1. To this end, the control unit is electrically connected to the readout device 13 and can receive signals from said readout device. The control unit can process and store the received signals. In addition, the control unit can determine a next step, for example by transmitting a command signal.

A step counter can be used, inter alia, to determine whether or not an animal is on heat, based on the number of steps.

The readout device 13 can also be connected to another part of the frame 2. In one embodiment, the readout device 13 is arranged near the feed trough 6.

In one embodiment, separating frames 14 extend from the device 1 over a distance which is at least equal to approximately half the average length of a cow. Preferably, the separating frame is made of stainless steel, although other materials such as plastic can also be used. The separating frames 14 prevent cows which are standing next to one another from leaning against each other too much.

In the illustrated embodiment, a frame part 15 is placed on the separating frame 14 and provided with a hinge 16, by means of which a railing part 17 is connected. The railing part 17 can pivot according to arrow 18. By means of a connection 19, such as a wire or belt, the railing part 17 is connected to an actuator, such as a pulley 20 with an electric motor 21. The electric motor 21 (not shown) can be connected to a control unit. The control unit can actuate the electric motor. This makes it possible to lower the railing part 17 from the illustrated open position to a closed position. This closing movement can take place after a readout device 13 has detected that there is an animal near the feed trough 6. Thus, it is possible to lock the animal in a closed space, with the head of the animal being held in the direction of the feed trough. Figure 2 shows fifteen locked-up animals.

In the illustrated example, feed troughs 6 for the animals are situated in the bottom section of the device 1. The device can be described as a feed column. This results in the construction taking up little space. The supplies 9,10 are kept at a distance above the floor 5. The feed column is optimally accessible to the animals.

The device is made more compact by the fact that the feed troughs 6, as can be seen in Figure 2, are situated in one line, in particular on the line along the virtual centre 25 of device 1. Feed trough 6 is accessible from a first side of the device, while feed trough 6' is accessible from the other side. This results in a space saving.

In one embodiment, the feed troughs 6 and 6' may be arranged at different levels with respect to the floor 5. Feed troughs 6' may be fitted at a lower position with respect to the frame than feed troughs 6. This results in an even more compact embodiment.

Figure 1 shows feed trough 6. This may be filled with an amount of feed which is adapted to the animal 7 and which can be supplied by means of a downpipe 30. The feed is passed into the feed trough 6 through the force of gravity. The amount of feed can be adapted to the animal by means of the control unit.

Feed is taken from the supplies 9,10 and taken by means of a conveying device 32, which is illustrated diagrammatically in Figure 1, to the respective downpipe 30. The conveying device 32 comprises a receptacle 33 with a flap or another discharge means which can be opened. The flap remains closed when the receptacle is situated below an outlet of a supply 9,10, so that an amount of feed can be received and collected from the respective supply 9,10. Subsequently, the receptacle 33, which is situated on a trolley 34, is moved with its flap closed along a guide 31, substantially parallel to a longitudinal direction 3 to the feed trough 6 to be filled, after which the flap is opened, so that the feed is passed into the feed trough 6 via the respective downpipe 30.

According to one embodiment, the total feed system of which the device 1 forms part furthermore comprises external conveying unit 40 for conveying feed to the storage box 9 and 10, respectively, from a remote location, such as a location outside a stable. The conveying unit 40 comprises a rail 41, which may be connected to the floor 5. The loading unit 42 is movable along the rail 41. In the illustrated embodiment, the loading unit comprises a gripper 43 which is connected to the loading unit 42 by means of an extendable arm 45. The gripper can take an amount of feed from an external supply and can accommodate said amount in the loading unit, which is then taken along the rail 41 to a position above a storage box 9,10. There, the amount from the loading unit 42 can be released and poured into the storage box 9,10.

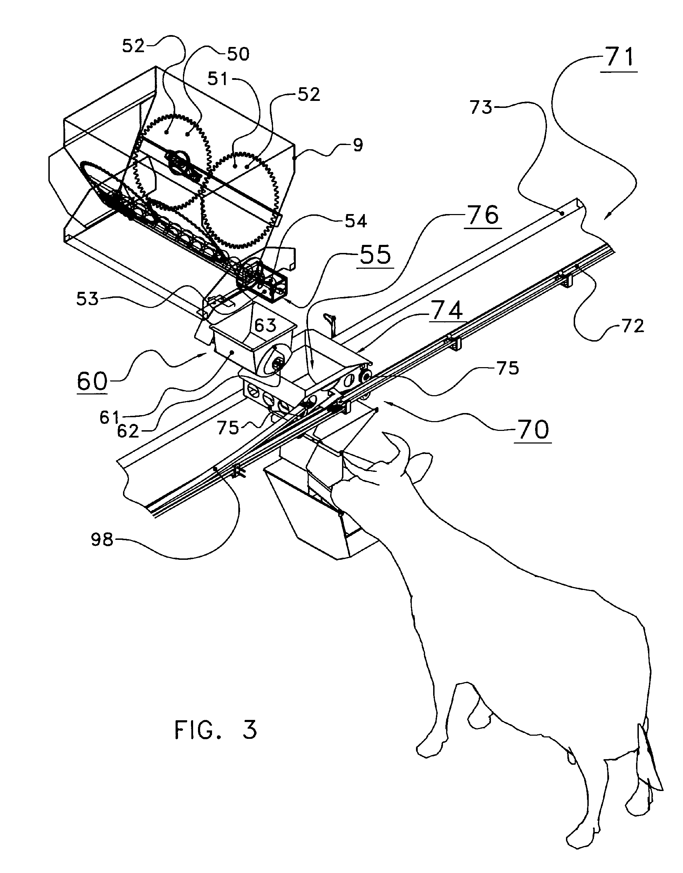

Figure 3 shows a storage box 9 in partially cut-away view. The storage box 9 comprises two wheels 50,51 which are fitted on the inside of the storage box 9. The wheels are provided with a number of pins 52. By rotating the wheels by means of a suitable transmission, the feed situated in the storage box 9 can be mixed or even ground. The transmission is connected to an actuator (not shown) which can be remote-controlled or is connected to a control unit.

The storage box 9 has a cone-shaped cross section. In the illustrated embodiment, an auger 54 is positioned near a floor 53 of the storage box 9. The auger 54 may be positioned horizontally or obliquely, in particular inclined slightly upwards towards the mouth or discharge 55. The auger can be driven by means of an actuator, such as an electric motor, as a result of which feed is forced out of the storage box 9 via the mouth 55.

Instead of an auger, a gripper, conveyor belt or any other device which is known per se for conveying feed from the box 9,10 can be used. According to the invention, conveyors 54 convey feed from a storage box 9 upwards in order to achieve accurate metering. The conveyor 54 has a discharge end which coincides with the outlet 55 of the storage box 9.

The time during which the auger is driven and/or the number of turns of the auger can be controlled by the control unit. This makes it possible to remove a certain amount of feed from the supply.

In addition, or instead thereof, a metering device 60 may be placed downstream of the mouth 55, in which feed removed from the supply 9 can be temporarily stored. The metering device 60 comprises a metering receptacle 61, which is provided with a bottom which is, for example, in the form of two halves or flaps 63 which can pivot about a shaft 62. When the halves 63 move apart, an aperture opens, through which the feed falls. From the illustrated closed position, the flap 63 can be opened, as a result of which feed collected in the metering receptacle 61 is released at an underside of the metering device.

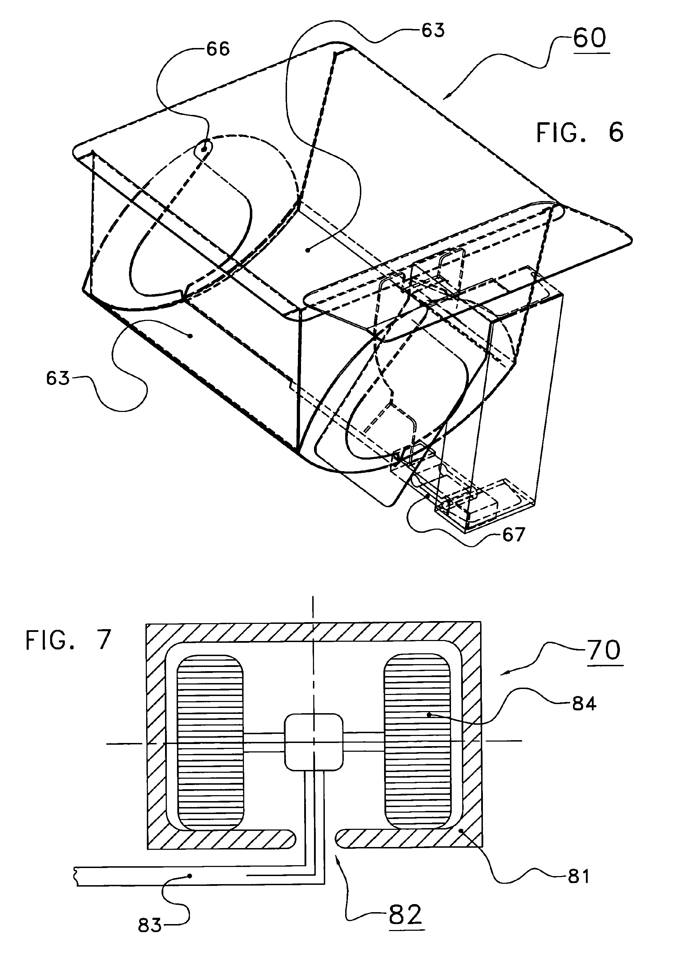

The metering receptacle 61 can be connected to a weighing unit 67 which is illustrated diagrammatically in Figure 6. The metering receptacle 61 collects an amount of feed which, in this embodiment, is conveyed out of the storage box 9 by means of auger 54. The weighing unit 67 can weigh the amount of feed present in the metering receptacle 61. The weighing unit 67 may be a load cell on which the metering receptacle 61 rests, via for example a leaf spring and link system (not shown).

The device contains a drive member 62, such as a drive shaft, for controlling the opening of the bottom. The drive member 62 can be controlled by a computer/control unit which also controls the order of the operation of the conveyor 54.

Identification means 13 are provided in order to identify an individual animal. In the illustrated example, the identification means 13 are provided in the partitions 4, but it will be clear that the identification means can also be provided in other locations, such as for example the feed troughs 6. By means of the identification means 13, the identity of an animal which is present near a feed trough 6 is automatically determined. The determined identity or a representative signal therefor can be transmitted to a computer/control unit.

Using correspondence tables stored in the memory of, for example, the computer, it is then possible to dispense, for example, the amount of feed intended for said animal. This amount can be determined by means of the weighing device. In addition, the computer controls the drive of the conveyor 54.

In order to offer animals of different height easy access to a feed trough 6, the height of a feed trough 6 with respect to the floor 5 is adjustable. To this end, a feed trough can be arranged on the frame 2 so as to be adjustable in height, the adjustment being effected by, for example, a motor, which is controlled by the computer. In order to drive the motor for adjusting the height of the feed troughs, the computer can use data from the animal identification or the animal identification means 13, respectively.

In another embodiment (not shown), a floor part on which the animal can stand and which is situated within the space enclosed by the railing part 17, can be moved up or down by a lifting device 28. A raised inclined floor part has the advantage that the cow does not have to stand in excrement unnecessarily. In particular, the floor part can have an inclination which descends from the centre of the device.

If the device according to the invention is suitable for feeding calves or other animals which are still growing, it is advantageous if an animal height measurement means is provided for measuring the height of an animal. Such an animal height measuring means may, for example, be a camera or a grid of lights. Measuring strips (or sensors in the form of strips) may be provided which can be used for measuring the height, and optionally for controlling the height-adjustment of the feed trough and the floor part with respect to one another.

The information from the height-measuring means can also be used for controlling a feed-metering device, which dispenses feed in a metered way, inter alia using data from the animal-recognition device 13 and feed data stored in the computer. In this case, the information from an animal-weighing means, for example a floor part which is designed as a weighing floor, can be used. To this end, the animal height measuring means and weighing means comprise a data-transfer means for transmitting measurement data to the computer. The computer is provided with a memory which contains average growth data for that particular kind of animal, preferably in the form of correspondence tables, with respect to age-dependent weight, and/or with respect to age-dependent height, and/or with respect to the age-dependent amount of feed per animal per day, and/or historical growth data of an animal, with the feed-metering device dispensing feed in a metered manner using at least one of the data.

In order to pass feed from the storage boxes 9,10 and/or the optional metering devices 60 to the desired respective feed trough, the embodiment from Figure 3 provides a conveying device, which is downstream (in this application reference is made to a stream of feed towards the feed trough 6) of the storage box 9,10 and upstream of the feed trough 6.

The conveying device 70 according to the illustrated embodiment comprises a guide 71 which in this embodiment comprises a double rail 72,73. The conveying device 70 also comprises a transport trolley 74 which can be displaced along the guide. The transport trolley 74 comprises a number of bearing-supported wheels 75 which can roll over the rails 72,73. The transport trolley 74 furthermore comprises a receptacle 76, in which feed can be collected.

The guide 71 and in particular the rails 72,73 are connected to the frame 2. The guide extends parallel to the longitudinal direction 3 of the device 1. The guide is arranged at a distance below the discharge of the storage boxes 9,10 and above an entry of downpipes 30 which lead to the troughs 6. As a result thereof, use can be made of the force of gravity to pass feed from the storage boxes 9,10 to the receptacle 76 and, by means of a hatch in the receptacle 76, in the inlet of the downpipes 30, likewise under the effect of the force of gravity.

The conveying device 70 is designed to collect feed from the storage boxes 9,10 and convey it to the respective downpipes and feed troughs 6 in accordance with the instructions from a control unit/computer.

The conveying device 70 comprises a trolley 74 which is movable along the guide. The trolley 74 can thus move in the longitudinal direction 3 and can therefore be positioned above each of the inlets of the respective downpipes 30. The trolley 74 with box 76 can also be moved under the discharge or mouth 55 of a storage box 9,10.

In the illustrated embodiment, the trolley 74 moves over the guide 71. In another embodiment, the trolley 74 can move under the guide 71. It is also possible for a wheel 75 of the trolley 74 to be accommodated in a guide 71 or rails 72,73.

The rail 72,73 may have a hollow profile with an opening or longitudinal groove 82 in the longitudinal direction 3. Such an embodiment is illustrated in Figure 7. The hollow profile 81 of a rail is C-shaped, viewed in cross section, and is provided with an opening 82. The longitudinal groove 82 preferably extends along the underside of the rails 72,73. As a result thereof, dirt cannot or can hardly enter the cavity of the rails. This prevents the bearing-supported wheel 84 from slipping. In the cavity of the profile 81, two bearing-supported wheels 84 are accommodated which are connected to the trolley 74 by means of a connection 83.

The rails 72,73 are on either side of the mouths 55 of the storage boxes 9,10 and on either side of the inlet of the downpipes 30. This makes it possible to make the construction more compact. The trolley 74 can be partially suspended between the guide 71. This results in a space saving compared to suspended constructions according to the prior art.

The double guide 71 also results in a more stable conveying device. It is also possible to move the receptacle 76 centre-to-centre, for example along the centre 3 under a mouth 55 of a storage box 9,10 or under a hatch 63 of a metering device 60, in order to ensure that no feed is lost due to the fact that it is not passed into the receptacle 76. In addition, the speed at which the feed is passed downstream in each case can be maximized. The dimensions of the passage openings, for example the mouth 55, but also the hatch 63, can be made as large as possible.

Due to the fact that storage boxes 9,10 for different kinds of feed are accommodated in the device 1, a composite amount of feed for a dairy animal 7, whose presence is detected near a feed trough 6, can quickly be collected from the respective storage boxes 9,10 and taken to the respective feed trough 6 by means of the conveying device 40. With a single conveying device or a single trolley 74, the construction according to the invention can fill at least thirty feed troughs without the waiting time for the cows becoming excessively long.

In one embodiment, a second trolley 74 can be added, thereby extending the capacity further. It is possible to arrange the control unit in such a manner that the first trolley 74 collects feed and conveys it to troughs at a first end of the device, for example the left-hand part of the device from Figure 3 and that the second trolley is controlled in order to convey the same feed supplies 9,10 to feed troughs which are situated at the other end, i.e. the right-hand part in Figure 3. As a result thereof, the capacity of the device 1 can be increased further, while using the same number of storage boxes 9,10.

It is readily possible to add additional feed troughs to the device 1 according to the illustrated embodiments. The guide 70 can be extended and additional feed troughs can be added. In particular, it is possible to provide a feed device which is of modular design. For the modular device, a modular part for a feed device 1 is provided which comprises a frame with one or more feed troughs and a guide, in which the frame is connectable to the frame 2 and the guide is connectable to the guide 70. As a result thereof, the trolley 74 can reach the newly added feed troughs 6.

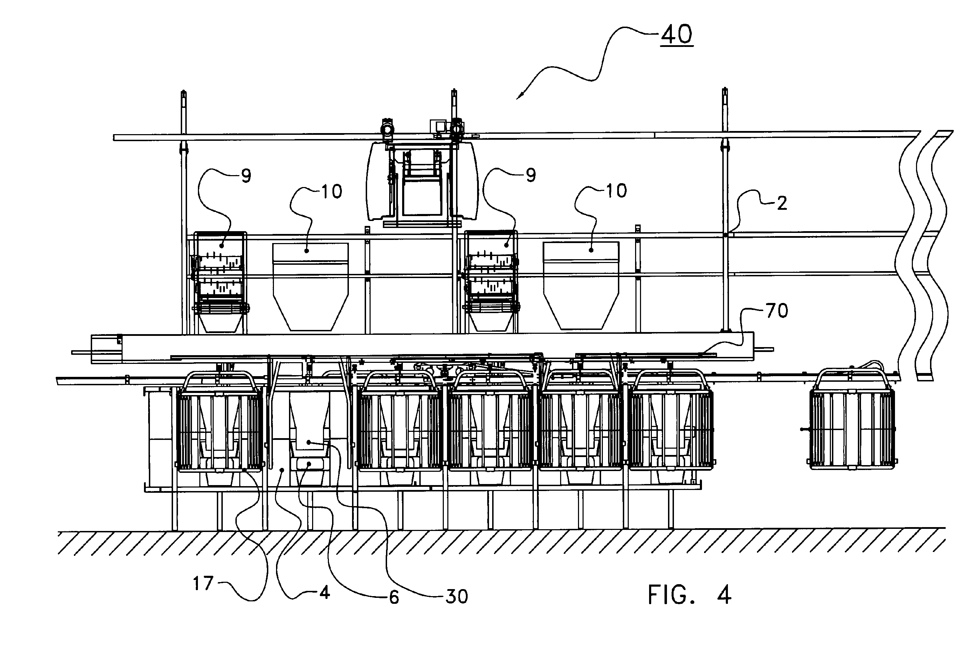

Figure 4 shows a side view of the embodiment illustrated in Figures 2 and 3. Two kinds of storage boxes 9,10 are placed next to one another on the frame 2 in the longitudinal direction 3. The conveying unit 40 is also connected to the frame 2 and can also move in a longitudinal direction above the respective storage boxes 9,10. The storage boxes 9,10 may be provided with a load cell or another detection means which can determine the filling level of the storage box 9,10 and on the basis of which the decision can be taken to replenish the amount of feed in the storage box 9,10. The conveying unit 40 can then be controlled to convey additional feed from an external supply to the storage box 9,10.

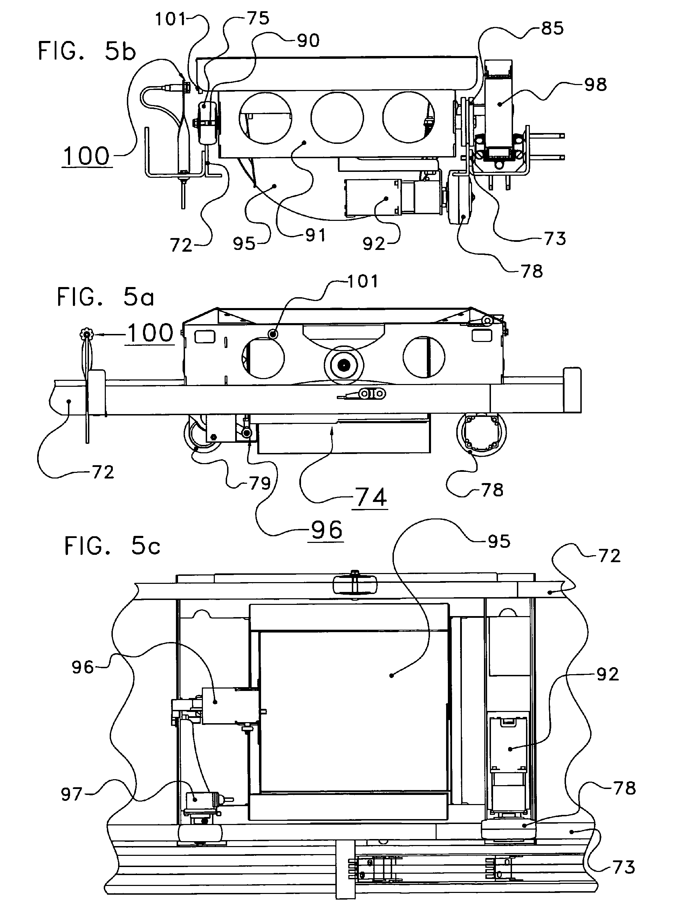

Figure 5a shows a side view of the trolley 74. Figure 5a shows a detail of the conveying device 32 of an embodiment according to the invention. Figure 5b shows a front view of the trolley 74 arranged on the two rails 72, 73, which together form the guide 71 of the conveying device. In this embodiment, the tracks 72,73 extend in the longitudinal direction 3. In one embodiment, the track is linear. In one embodiment, the track is curved.

The tracks 72,73 are arranged at a distance from one another. This results in an intermediate space between the tracks. The receptacle 33 can be situated exactly between the latter. Thus, the receptacle 33 can move between the tracks 72,73 and a space saving is achieved.

The trolley 74 rolls along the rail 72 by means of the bearing-supported wheel 75. The shaft 90 of the wheel 75 is shown in Figure 5a. Trolley 74 comprises a casing 91 which accommodates the receptacle or container 95. The receptacle 95 may be designed as a hatch. The hatch may be closed or open. As a result, feed can easily be passed from the top into the receptacle 95 of trolley 74 after the trolley 74 has been moved to a desired filling location, in this case preferably controlled and operated by a control unit. The control unit can react to the identification of a cow at a feed trough 6, with a specific feed program being retrieved from a memory of the control unit. The trolley 74 is then operated in such a manner that the respective amounts of feed in the receptacle 95 are collected by positioning the trolley 74 in each case below the outlet of a feed storage box or a metering device 60. The desired amount of feed can then be dispensed to the trolley and collected. The collected amount of feed is then taken to the desired feed trough, that is positioned upstream thereof, and the hatch can be opened by means of an actuator 96 which is arranged for the purpose and which is only shown diagrammatically in Figure 5a. It will be clear to those skilled in the art that various embodiments are possible for a trolley, a hatch or the actuator.

In the illustrated embodiment, the receptacle 95, which is designed as a hatch, is closed.

In the front view, on the right-hand side according to the view from 5b, there is a power supply. By means of a cable 98 which is attached to the trolley 74, the trolley 74 and, for example, the actuator 96 are provided with electricity. The cable 98 may have two fixed ends, one connected to a power supply which is arranged on the fixed frame and one end connected to the trolley 74. Via the cable 98, signals, such as error signals, position signals and the like can also be sent from the trolley 74 back to the control unit.

Trolley 74 may be provided with a suitable drive mechanism 97 for moving the trolley 74 along the guide 70. In the illustrated embodiment, this is connected to a bearing-supported wheel 79 which engages with the underside of the guide. Preferably, two separate wheels are used for, on the one hand, the drive mechanism and, on the other hand, determining the position, as shown in the embodiment from Figures 5a-5c. In another embodiment, the trolley 74 is driven and moved by means of a belt.

A wheel 78 is moved against the rail 82 from an underside. To this end, a suitable suspension (not shown) can be used. The suspension exerts a force on the wheel 78 so that the latter is pressed against the underside of rail 82. As the wheel 78 is moved against the underside of the rail 82, the wheel 78 is less prone to dirt. As a result thereof, this wheel 78 will slip less often. This wheel 78 can be fitted with a digital counter 92, by means of which it is possible for a control unit which is connected to this counter to determine and control the position of the trolley 74. Depending on the number of turns or rotations of the wheel 78, the position of the trolley 74 can be guided and the control unit can take the trolley 74 to a desired location.

In another embodiment, sensors 100 are provided at the locations where the trolley can stop or the trolley is provided with a sensor which can detect a distinguishing mark of said location. This makes it possible to determine and control the position of the trolley 74. An identification or other detectable element 101 may be provided on the trolley 74 with which the sensor 100 can interact in order to record the presence of the trolley 74 at a certain location. Each desired stop along the guide 70 may be provided with a sensor 100. This makes it possible to stop the trolley 74 at each of these locations. The location is, for example, a filling location, that is to say the trolley is positioned under the discharge of a feed storage box and feed is passed into the trolley or the location is, for example, a location above a feed trough or a downpipe to a feed trough, in which the hatch of the trolley 74 can be opened in order to pass feed from the trolley to the feed trough.

Figure 6 shows a detail of a partially cut-away view of the metering device 60. The flap parts 63 can pivot about hinge 66. The load cell 67 is shown diagrammatically.

The invention is not limited to the above-described exemplary embodiments, but it will be clear that additions and modifications are possible without departing from the scope of the claims. Thus, the device may be provided with a lighting fixture which is arranged behind a feed trough, preferably a central lighting fixture for all feed troughs. In addition, the device may be provided with pest control means, and/or means for preventing condensation from forming in the device, and/or means for providing cooling to an animal. In particular when used for dairy animals, it has been found to be advantageous if the device is provided with means for giving a signal to the animal which indicates that the animal is expected at a milking robot. The invention therefore also relates to each of said embodiments in itself. Thus, for example, a separating frame can also be used in the storage boxes independently of the conveying of feed upwards. In particular, the invention also relates to a device for housing a dairy animal, which device comprises a milking robot, characterized in that the device is provided with signal-emitting means for emitting a signal that a dairy animal is expected at the milking robot. These signal-emitting means can be provided at various strategic positions in a stable or outside thereof. Furthermore, it will be clear that a number of the feed troughs can also be configured to be drinking troughs, with the colour and/or design being such that an animal can distinguish between feed troughs and drinking troughs.

## Claims

1. Device (1) for dispensing feed to a number of feed troughs which are accessible to animals, such as dairy animals, comprising a frame (2) which is provided with a number of storage boxes (9,10) for storing a supply of feed, wherein the storage box has an outlet (55), and wherein the device (1) furthermore comprises a conveying device (32) for conveying feed from the storage boxes (9,10) to respective feed troughs, and wherein the conveying device (32) comprises a receptacle (33) for temporarily accommodating feed, wherein the receptacle (33) is movable along a guide (31) connected to the frame (2) between positions downstream of the storage boxes (9,10) and positions upstream of the respective feed troughs, wherein the guide (31) comprises at least two tracks (72,73) which substantially extend parallel to one another.

2. Device according to Claim 1, wherein the receptacle (33) is placed substantially between the tracks (72,73).

3. Device according to Claim 1 or 2, wherein the guide comprises a double rail (72,73).

4. Device according to one of the preceding claims, wherein the device (1) is a feed column.

5. Device according to one of the preceding claims, wherein a metering device (54, 60) for metering the feed is arranged on the frame.

6. Device according to one of the preceding claims, wherein the receptacle (33) comprises a bottom (95) which can be opened.

7. Device according to one of the preceding claims, wherein a number of feed troughs (6,6',6") accessible to animals are connected to the frame (2).

8. Device according to Claim 7, wherein the feed troughs (6,6',6") form a row of feed troughs which are arranged next to one another.

9. Device according to Claim 7 or 8, wherein the receptacle (33) is movable above the feed troughs (6,6',6").

10. Device according to one of the preceding claims, wherein the receptacle (33) is movable below a mouth (55) of the storage box (9,10).

11. Device according to one of the preceding claims, wherein the device (1) is modular.

12. Device according to one of the preceding claims, wherein an intermediate store (60) is provided on the frame (2) downstream of the storage box (9,10) and upstream of the conveying device (32), wherein the intermediate store (60) is provided with a discharge flap (63).

13. Device according to Claim 12, wherein the intermediate store (60) comprises a weighing device (67).

14. Device according to one of the preceding claims, wherein the receptacle (33) comprises a trolley (74) which is provided with a number of bearing-supported wheels (78,85,75) and which is movable along the guide (31) and wherein a digital counter (92) is connected to the bearing-supported wheel (78).

15. Device according to Claim 14, wherein the bearing-supported wheel (78) which is connected to a digital counter (92) is movable along an underside of the guide (72,73).
